(19) Europäisches Patentamt
European Patent Office
Office européen des brevets

(11) **EP 2 216 745 A1**

(12) **EUROPEAN PATENT APPLICATION**

(43) Date of publication:
**11.08.2010 Bulletin 2010/32**

(51) Int Cl.:
**G06Q 30/00** *(2006.01)*

(21) Application number: **09252844.7**

(22) Date of filing: **21.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.01.2009 JP 2009015704**

(71) Applicant: **Sony Corporation**
**Tokyo 108-0075 (JP)**

(72) Inventors:
• **Isozu, Masaaki**
**Tokyo (JP)**
• **Enami, Tsugutomo**
**Tokyo (JP)**
• **Kawano, Shinichi**
**Tokyo (JP)**

(74) Representative: **Malden, Nicholas et al**
**D Young & Co LLP**
**120 Holburn**
**London EC1N 2DY (GB)**

(54) **Communication processing apparatus, communication processing method, and program**

(57) There is provided a control unit of an information processing apparatus for causing a display unit to display selected information stored in a storage unit at a selected information display position, as well as causing the display unit to display a first selection candidate information, which is one of object information and relationship information correlated with the selected information, at a first candidate information display position which is a position departing a predetermined distance from the selected information display position in a predetermined first direction, and to display a second selection candidate information, which is one of the object information and the relationship information correlated with the selected information other than the first selection candidate information, at a second candidate information display position which is a position departing a predetermined distance in a predetermined second direction opposite from the first direction.

**FIG.19**

**Description**

BACKGROUND OF THE INVENTION

The present invention relates to a communication processing apparatus, a communication processing method, and a program.

Relationships among people were often shown in the form of a network diagram in the related art. For example, a mixiGraph is a system for tracing relationship charts of MyMixis and displaying them as a network. Although relationships among people can be visually recognized by this, it is difficult to display various relationships other than simply "friend", and a complicated pointer operation (mouse operation) for tracing the relationships is necessary.

Moreover, as a system for displaying a relationship, such as between contents, Amazon (registered trademark) is a system for displaying related products when a certain product is searched. Although it is possible to further search for related contents by clicking the product, it becomes difficult to grasp the relationships of contents up to present content when searching for products one after another.

Moreover, there is disclosed a technology by which a sender of information easily sets information to be shared only with people in a particular domain based on his/her own social network (e.g., refer to Japanese Unexamined Patent Application Publication No. 2007-52557.

However, according to the above-described technology, there was an issue that it was difficult to display relationships among objects such as people or contents in a visually understandable manner and to easily search for related objects without complicated operation.

In light of the foregoing, it is desirable to provide a novel and improved technology capable of displaying relationships among objects in a visually understandable manner and searching for related objects without complicated operation.

SUMMARY OF THE INVENTION

According to an embodiment of the present invention, there is provided an information processing apparatus including a display unit having a display screen as well as capable of displaying information on the display screen, an input unit capable of receiving an input of information, a storage unit for storing therein a plurality of relation information in which object information indicating an object is correlated with relationship information indicating a relationship of the object with other objects, and selected information which is the object information or the relationship information currently selected by a user, and a control unit for causing the display unit to display the selected information stored in the storage unit at a selected information display position, as well as causing the display unit to display a first selection candidate information, which is one of the object information and the relationship information correlated with the selected information, at a first candidate information display position which is a position departing a predetermined distance from the selected information display position in a predetermined first direction, and to display a second selection candidate information, which is one of the object information and the relationship information correlated with the selected information other than the first selection candidate information, at a second candidate information display position which is a position departing a predetermined distance in a predetermined second direction opposite from the first direction.

When receiving an input of information for designating the first direction via the input unit, the control unit may cause the display unit to display the selected information stored in the storage unit at the second selection candidate information display position, as well as cause the display unit to update the selected information stored in the storage unit by replacing the selected information with the first selection candidate information and to display the updated selected information at the selected information display position, and to display at the first selection candidate information display position one of the object information and the relationship information correlated with the selected information other than the information displayed at the second selection candidate information display position.

The storage unit may store therein the relationship information and the object information along with a priority thereof to be displayed by the display unit, and the control unit may determine information with the highest priority as information to be displayed at the first selection candidate information display position, among the object information or the relationship information correlated with the selected information other than the information displayed at the second selection candidate information display position.

When receiving an input of information for updating selection candidate information via the input unit, the control unit may cause the display unit to update the information displayed at the first selection candidate information display position by replacing the information displayed at the first selection candidate information display position with one of the object information and the relationship information correlated with the selected information other than the information displayed at the first selection candidate information display position and the information displayed at the second selection candidate information display position.

When receiving the input of information for designating the first direction via the input unit, the control unit may further cause the display unit to display a trajectory indicating movement from the second selection candidate information display position to the selected information display position.

The storage unit may be capable of further storing therein selection history information to which the selected information is added, and when updating the selected information stored in the storage unit, the control unit may add the selected information to the selection history information stored in the storage unit, and when receiving an input of information indicating user's favorite via the input unit, the control unit may cause the storage unit to store therein bookmark information indicating the user's favorite with the correlated selected information added to the selection history information, and when receiving an input of information for returning to the favorite information via the input unit, the control unit may delete the selected information in the inverse order they were added, up to before the selected information correlated with the bookmark information, as well as cause the display unit to display the selected information correlated with the bookmark information at the selected information display position.

When receiving an input of information for designating the second direction via the input unit, the control unit may cause the display unit to display the selected information stored in the storage unit at the first selection candidate information display position, as well as cause the display unit to update the selected information stored in the storage unit by replacing the selected information with the second selection candidate information, and to display the updated selected information at the selected information display position, and to display at the second selection candidate information display position one of the object information and the relationship information correlated with the selected information other than the information displayed at the first selection candidate information display position.

The control unit may further cause the display unit to display a third selection candidate information, which is one of the object information and the relationship information correlated with the selected information other than the first selection candidate information and the second selection candidate information, at a third selection candidate information display position which is a position departing a predetermined distance from the selected information display position in a predetermined third direction, and to display a fourth selection candidate information, which is one of the object information and the relationship information correlated with the selected information other than the first selection candidate information, the second selection candidate information, and the third selection candidate information, at a fourth selection candidate information display position which is a position departing a predetermined distance in a predetermined fourth direction opposite from the third direction.

When receiving an input of information for designating the first direction via the input unit, the control unit may cause the display unit to display the selected information stored in the storage unit at the second selection candidate information display position, as well as cause the display unit to update the selected information stored in the storage unit by replacing the selected information with the first selection candidate information and to display the updated selected information at the selected information display position, to display at the first selection candidate information display position one of the object information and the relationship information correlated with the selected information other than the information displayed at the second selection candidate information display position, to display at the third selection candidate information display position one of the object information and the relationship information correlated with the selected information other than the information displayed at the first selection candidate information display position and the information displayed at the second selection candidate information display position, and to display at the fourth selection candidate information display position one of the object information and the relationship information correlated with the selected information other than the information displayed at the first selection candidate information display position, the information displayed at the second selection candidate information display position, and the information displayed at the third selection candidate information display position.

The storage unit may store therein the relationship information and the object information along with a priority thereof to be displayed by the display unit, and the control unit may cause the display unit to display information correlated with the priority in descending order at the first selection candidate information display position, the third selection candidate information display position, and the fourth selection candidate information display position, among the object information or the relationship information correlated with the selected information other than the information displayed at the second selection candidate information display position.

The control unit may further cause the display unit to display the object information or the relationship information correlated with the first selection candidate information at positions departing a predetermined distance from the first selection candidate information display position respectively in the first direction and the fourth direction, to display the object information or the relationship information correlated with the second selection candidate information at positions departing a predetermined distance from the second selection candidate information display position respectively in the second direction and the third direction, to display the object information or the relationship information correlated with the third selection candidate information at positions departing a predetermined distance from the third selection candidate information display position respectively in the first direction and the third direction, and to display the object information or the relationship information correlated with the fourth selection candidate information at positions departing a predetermined distance from the fourth selection candidate information display position respectively in the second direction and the fourth direction.

According to the embodiments of the present invention described above, it is possible to display relationships among objects such as people or contents in a visually understandable manner and to easily search for related objects without complicated operation.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIG. 1 is a block diagram showing a functional configuration of an information processing apparatus;
FIG. 2 is a block diagram showing a hardware configuration of the information processing apparatus;
FIG. 3 is a diagram showing an overview of a system;
FIG. 4 is a diagram showing a conceptual model of object information and relationship information;
FIG. 5 is a diagram showing the overall flow of the system;
FIG. 6 is a diagram showing a display example when the object information is displayed at the center;
FIG. 7 is a diagram showing a display example when the relationship information is displayed at the center;
FIG. 8 is a diagram showing an extended model of FIG. 6 and FIG. 7.
FIG. 9 is a diagram showing a display example after a display object is changed;

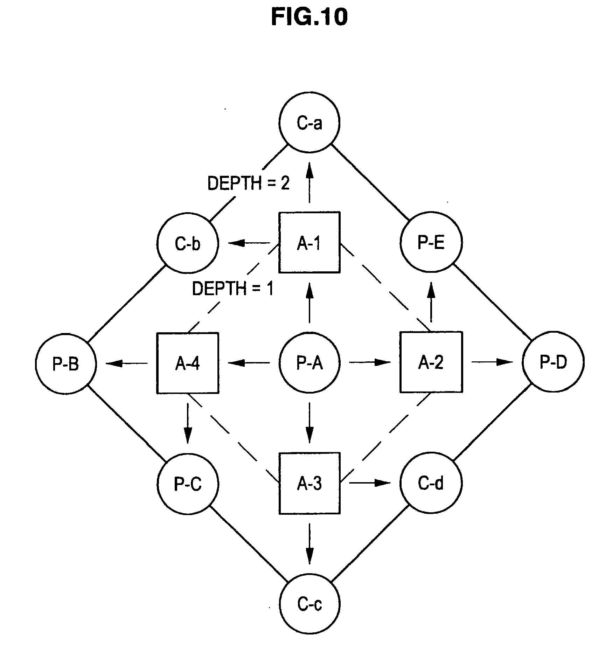

FIG. 10 is a diagram showing a display example when depth is 2.
FIG. 11 is a diagram showing an example of data stored in a database;
FIG. 12 is a diagram showing that obtainable information changes in accordance with depth;
FIG. 13 is a diagram showing a display example of a relationship search result;
FIG. 14 is a flowchart showing a processing flow for screen display;
FIG. 15 is a diagram showing an example of a display area;
FIG. 16 is a diagram showing a display example of the display object before and after it is changed;
FIG. 17 is a diagram showing a display example of the display object being changed to the right item;
FIG. 18 is a diagram showing a diagram showing a path stack from the start to the present;
FIG. 19 is a screen display image diagram when the information processing apparatus is in use;
FIG. 20 is a diagram showing a composition example of a relationships table holding data scores and the numbers of searches;
FIG. 21 is a diagram showing an example of relationship tables showing relationships between actors, and between contents, respectively;
FIG. 22 is a flowchart showing a processing flow for display according to depth;
FIG. 23 is a diagram showing a variation of the example shown in FIG. 17;
FIG. 24 is a diagram showing selection history information in a tree diagram;
FIG. 25 is a diagram showing the selection history information in a stack.

DETAILED DESCRIPTION OF THE EMBODIMENT

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted. The description will be made in the following order.

1. First Embodiment

1-1. Functional Configuration of Information Processing Apparatus
1-2. Hardware Configuration of Information Processing Apparatus
1-3. Detailed Description of Information Processing Apparatus

2. Variation of Present Embodiment
3. Conclusion

< 1. First Embodiment >

A first embodiment of the present invention will be described.

[1-1. Functional Configuration of Information Processing Apparatus]

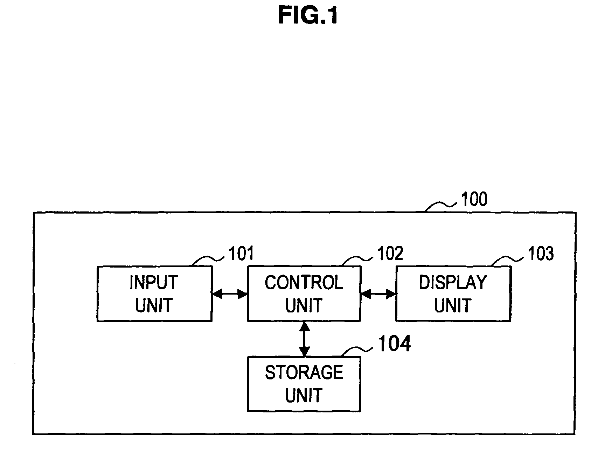

A functional configuration of an information processing apparatus according to a first embodiment of the present invention will be described. FIG. 1 is a block diagram showing the functional configuration of the information processing apparatus according to the first embodiment of the present invention. In the following, the functional configuration of the information processing apparatus according to the first embodiment of the present invention will be described using FIG. 1.

An information processing apparatus 100 includes an input unit 101, a control unit 102, a display unit 103, and a storage unit 104.

The input unit 101 is configured by an input device, for example, and has a function of receiving an input of information from a user. In the present embodiment, the input unit 101 has a function of receiving an input of operation for activating a variety of application programs from a user, for example.

The storage unit 104 is configured by, for example, a magnetic storage device such as HDD (hard disk drive), a semiconductor storage device, an optical storage device or a magneto-optical storage device. The storage unit 104 stores therein a variety of programs and data, and is configured by a storage device or the like. In the present embodiment, the storage unit 104 stores therein a plurality of relation information in which object information indicating an object is correlated with relationship information indicating a relationship between objects, and selected information which is the object information or the relationship information currently selected by a user. Here, the object is not particularly limited and may be, for example, a living creature such as person or animal or a material such as contents. The object information is not particularly limited as long as it is information for identifying the object, and may be, for example, a name of the object or may be image data of the object. Moreover, the relationship information is not particularly limited, and may be, for example, information for identifying a group to which the object belongs.

The display unit 103 has a display screen as well as capable of displaying information on the display screen. The display unit 103 is constituted by, for example, a device capable of visually notifying the user of required information such as display device including CRT (Cathode Ray Tube) display device, liquid crystal display device, plasma display, EL (Electro Luminescence) display device, and lamp.

The control unit 102 is configured by, for example, a CPU (Central Processing Unit), ROM (Read Only Memory), and RAM (Random Access Memory). The control unit 102 causes the display unit 103 to display the selected information stored in the storage unit 104 at a selected information display position, which is a predetermined position on the display screen. Here, the predetermined position on the display screen is not particularly limited, and may be, for example, almost at the center of the display screen or a position easily seen by the user within the display screen.

Moreover, the control unit 102 causes the display unit 103 to display a first selection candidate information, which is one of object information and relationship information correlated with the selected information, at a first candidate information display position which is a position departing a predetermined distance from the selected information display position in a predetermined first direction. Here, the predetermined first direction is not particularly limited, and may be a right, upper, left, or lower direction, for example. Moreover, the predetermined distance is not particularly limited, and may be a distance such that the selected information and the first selection candidate information are not overlapped with each other, for example. By this, when the user selects object information, the object information selected by the user is displayed at the selected information display position, and relationship information indicating a relationship of the object information with other object information is displayed at the first selection candidate information display position. Moreover, when the user selects relationship information, the relationship information selected by the user is displayed at the selected information display position, and object information whose relationship is indicated by the relationship information is displayed at the first selection candidate information display position.

Moreover, the control unit 102 causes the display unit 103 to display a second selection candidate information, which is one of object information and relationship information correlated with the selected information other than the first selection candidate information, at a second candidate information display position which is a position departing a predetermined distance in a predetermined second direction opposite from the first direction. Here, the predetermined second direction is not particularly limited, and may be a left direction if the first direction is a right direction, a lower direction if the first direction is an upper direction, a right direction if the first direction is a left direction, or an upper direction if the first direction is a lower direction, for example. Moreover, the predetermined distance is not particularly limited, and may be a distance such that the selected information and the second selection candidate information are not overlapped with each other, for example. By this, when the user selects object information, the object information selected by the user is displayed at the selected information display position, and relationship information indicating a relationship of the object information with other object information is displayed at the second selection candidate information display position. Moreover, when the user selects relationship information, the relationship information selected by the user is displayed at the selected information display position, and object information whose relationship is indicated by the relationship information is displayed at the second selection candidate information display position.

Moreover, when receiving an input of information for designating the first direction via the input unit 101, the control unit 102 may cause the display unit 103 to display the selected information stored in the storage unit 104 at the second selection candidate information display position. In this case, the control unit 102 may cause the display unit 103 to update the selected information stored in the storage unit 104 by replacing it with the first selection candidate information and to display the updated selected information at the selected information display position. Then, the control unit 102 causes the display unit 103 to display at the first selection candidate information display position one of object information and relationship information correlated with the selected information other than the information displayed at the second selection candidate information display position. The input of information for designating the first direction may be given by, for example, an arrow key or a button by which direction can be designated. By this, the user can set the item in the first direction as the object of reference.

Moreover, the storage unit 104 may store therein relationship information and object information along with a priority thereof to be displayed by the display unit 103. In this case, among object information or relationship information correlated with the selected information other than the information displayed at the second selection candidate information display position, the control unit 102 may determine information with the highest priority as information to be displayed at the first selection candidate information display position. Here, the priority order may be predetermined or the number of searches for the relationship information or object information may be counted and the counted number of searches may be used as the priority order. Moreover, the priority order may be calculated by a predetermined data score, calculated number of searches and the like. By this, the user can refer from the information with a high priority.

Moreover, when receiving an input of information for updating selection candidate information, the control unit 102 may cause the display unit 103 to update the information displayed at the first selection candidate information display position by replacing it with one of object information and relationship information correlated with the selected information other than the information displayed at the first selection candidate information display position and the information displayed at the second selection candidate information display position. Because of this, the user can update the displayed information. The input of information for updating the selection candidate information may be given by buttons, for example.

Moreover, when receiving an input of information for designating the first direction via the input unit 101, the control unit 102 may cause the display unit 103 to further display a trajectory indicating movement from the second selection candidate information display position to the selected information display position. By this, the user can figure out the information path going down for reference. The trajectory indicating movement is not particularly limited as long as it can emphasize distance from the second selection candidate information display position to the selected information display position. For example, distance from the second selection candidate information display position to the selected information display position can be displayed in highlighted color (e.g., red, blue or the like) or the second selection candidate information display position and the selected information display position can be connected with a bold line.

The storage unit 104 may be capable of further storing therein selection history information to which selected information is added. In this case, when updating selected information stored in the storage unit 104, the control unit 102 adds the selected information to the selection history information stored in the storage unit 104. Then, when receiving an input of information indicating user's favorite via the input 101, the control unit causes the storage unit to store therein bookmark information indicating user's favorite with the correlated selected information added to the selection history information. Furthermore, when receiving an input of information for returning to the favorite information via the input unit 101, the control unit 102 deletes the selected information in the inverse order they were added, up to before the selected information correlated with the bookmark information. At the same time, the control unit 102 causes the display unit 103 to display the selected information correlated with the bookmark information at the selected information display position. By this, the user can return to his/her favorite information with easy operation.

When receiving an input of information for designating the second direction via the input unit 101, the control unit 102 may cause the display unit 103 to display the selected information stored in the storage unit 104 at the first selection candidate information display position. At the same time, the control unit 102 may cause the display unit 103 to update the selected information stored in the storage unit 104 by replacing it with the second selection candidate information and to display the updated selected information at the selected information display position. Then, the control unit 102 may cause the display unit 103 to display at the second selection candidate information display position one of object information and relationship information correlated with the selected information other than the information displayed at the first selection candidate information display position. By this, the user can set not only the item in the first direction but also the item in the second direction as the object of reference.

Furthermore, the control unit 102 may cause the display unit 103 to display a third selection candidate information, which is one of object information and relationship information correlated with the selected information other than the first selection candidate information and the second selection candidate information, at a third selection candidate information display position which is a position departing a predetermined distance from the selected information display position in a predetermined third direction. In this case, the control unit 102 may cause the display unit 103 to display a fourth selection candidate information, which is one of object information and relationship information correlated with the selected information other than the first selection candidate information, the second selection candidate information, and the third selection candidate information, at a fourth selection candidate information display position which is a position departing a predetermined distance in a predetermined fourth direction opposite from the third direction. By this, when the user selects object information, relationship information indicating the relationship of the object information with other object information selected by the user is displayed at the first selection candidate information display position. Moreover, when the user selects relationship information, the relationship information selected by the user is displayed at the third selection candidate information display position and at the fourth selection candidate information display position. Moreover, when the user selects relationship information, object information whose relationship is indicated by the relationship information is displayed at the third selection candidate information display position and at the fourth selection candidate information display position.

When receiving an input of information for designating the first direction via the input unit 101, the control unit 102 may cause the display unit 103 to display the selected information stored in the storage unit 104 at the second selection candidate information display position. At the same time, the control unit 102 may cause the display unit 103 to update the selected information stored in the storage unit 104 by replacing it with the first selection candidate information and to display the updated selected information at the selected information display position. Moreover, the control unit 102 may cause the display unit 103 to display at the first selection candidate information display position one of object information and relationship information correlated with the selected information other than the information displayed at the second selection candidate information display position. Moreover, the control unit 102 may cause the display unit 103 to display at the third selection candidate information display position one of object information and relationship information correlated with the selected information other than the information displayed at the first selection candidate information display position and the information displayed at the second selection candidate information display position, and may cause the display unit 103 to display at the fourth selection candidate information display position one of this object information and relationship information correlated with the selected information other than the information displayed at the first selection candidate information display position, the information displayed at the second selection candidate information display position, and the information displayed at the third selection candidate information display position. By this, the user can set the item in the first direction as the object of reference.

Moreover, the storage unit 104 may store therein relationship information and object information along with a priority thereof to be displayed by the display unit 103. In this case, among object information or relationship information correlated with the selected information other than the information displayed at the second selection candidate information display position, the control unit 102 may cause the display unit 103 to display information correlated with the priority in descending order at the first selection candidate information display position, the third selection candidate information display position, and the fourth selection candidate information display position. By this, the user can refer from the information with a high priority.

Furthermore, the control unit 102 may cause the display unit 103 to display object information or relationship information correlated with the first selection candidate information at positions departing a predetermined distance from the first selection candidate information display position respectively in the first direction and the fourth direction. In this case, the control unit 102 may cause the display unit 103 to display object information or relationship information correlated with the second selection candidate information at positions departing a predetermined distance from the second selection candidate information display position respectively in the second direction and the third direction. Moreover, the control unit 102 may cause the display unit 103 to display object information or relationship information correlated with the third selection candidate information at positions departing a predetermined distance from the third selection candidate information display position respectively in the first direction and the third direction. Moreover, the control unit 102 may cause the display unit 103 to display object information or relationship information correlated with the fourth selection candidate information at positions departing a predetermined distance from the fourth selection candidate information display position respectively in the second direction and the fourth direction. By this, object information or related information can be displayed at farther positions from the selected information display position, and the user's view range can be expanded.

The functional configuration of the information processing apparatus 100 according to the first embodiment of the present invention has been described above. Next, a hardware configuration of the information processing apparatus 100 according to the first embodiment of the present invention will be described.

[1-2. Hardware Configuration of Information Processing Apparatus]

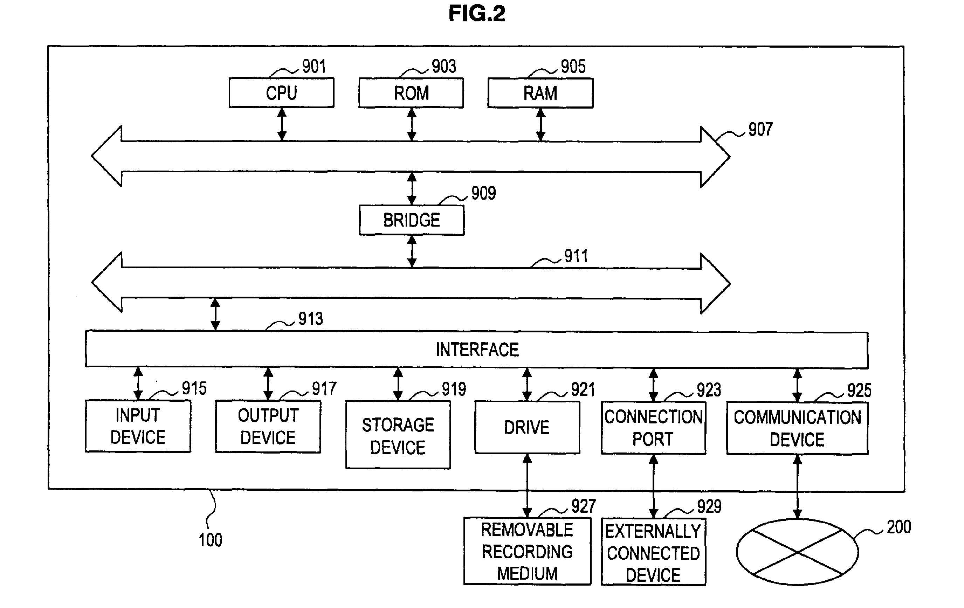

The hardware configuration of the information processing apparatus according to the first embodiment of the present invention will be described next. FIG. 2 is a block diagram showing the hardware configuration of the information processing apparatus according to the first embodiment of the present invention. In the following, the hardware configuration of the information processing apparatus according to the first embodiment of the present invention will be described using FIG. 2.

The information processing apparatus 100 mainly includes a CPU 901, a ROM 903, a RAM 905, a host bus 907, a bridge 909, an external bus 911, an interface 913, an input device 915, an output device 917, a storage device 919, a drive 921, a connection port 923, and a communication device 925.

The CPU 901 functions as an arithmetic processing device and a control device, and controls the entire or a part of operation within the information processing apparatus 100 according to various types of programs stored in the ROM 903, the RAM 905, the storage device 919, or a removable recording medium 927. The ROM 903 stores therein programs, calculation parameters and the like used by the CPU 901. The RAM 905 primarily stores therein programs used by the CPU 201, parameters appropriately changing in the execution, and the like. These are interconnected via a host bus 907 including an internal bus such as CPU bus.

The host bus 907 is connected to an external bus such as PCI (Peripheral Component Interconnect/ Interface) bus via the bridge 909.

The input device 915 is an input means operated by a user such as mouse, keyboard, touch panel, button, switch and lever. Moreover, the input device 915 may be a remote controlling means (so-called remote controller) using infrared rays or other radio waves, or may be an externally connected device 929 such as cell phone or PDA corresponding to the operation of the information processing apparatus 100, for example. Furthermore, the input device 915 includes, for example, an input control circuit for generating an input signal based on information input by the user who uses the above-mentioned operation means and outputting the input signal to the CPU 901. By operating this input device 915, the user of the information processing apparatus 100 can input various data into or provide an operation instruction to the information processing apparatus 100.

The output device 917 is constituted by, for example, a device capable of notifying the user of acquired information visually or audibly such as display unit including CRT display device, liquid crystal display device, plasma display device, EL display device, and audio output device including speaker and head phone, and printer device, cell phone, and facsimile. The output device 917 outputs a result obtained by various processing performed by the information processing apparatus 100, for example. Specifically, the display device displays the result obtained by various processing performed by the information processing apparatus 100 in the form of text or image. On the other hand, the audio output device converts audio signals composed of reproduced sound data, audio data and the like to analog signals and outputs them.

The storage device 919 is a data storage device configured as an example of the storage unit of the information processing apparatus 100, and is constituted by, for example, a magnetic memory device such as HDD (Hard Disk Drive), a semiconductor memory device, an optical memory device, or a magneto-optical memory device. This storage device 919 stores therein programs executed by the CPU 901 and various data and audio signal data and image signal data obtained from the outside.

The drive 921 is a reader/writer for recording medium and is built in or externally attached to the information processing apparatus 100. The drive 921 reads out information recorded in the attached removable recording medium 927 such as magnetic disk, optical disk, magneto-optical disk, and semiconductor memory, and outputs the information to the RAM 905. Moreover, the drive 921 can write record into the attached removable recording medium such as the magnetic disk, optical disk, magneto-optical disk, and semiconductor memory. The removable recording medium 927 is, for example, a DVD media, HD-DVD media, a Blu-ray media, a compact flash (Compact Flash: CF) (registered trade mark), a memory stick, or a SD memory card (Secure Digital memory card). Moreover, the removable recording medium 927 may be, for example, an IC card (Integrated Circuit card) on which a noncontact IC chip is mounted or an electronic device.

The connection port 923 is, for example, a port for connecting a device directly to the information processing apparatus 100 such as USB (Universal Serial Bus) port, IEEE1394 port such as i.Link, SCSI (Small Computer System Interface) port, RS-232C port, an optical audio terminal, HDMI (High-Definition Multimedia Interface) port. By the externally connected device 929 being connected to this connection port 923, the information processing apparatus 100 obtains audio signal data and image signal data directly from the externally connected device 929 and provides audio signal data and image signal data to the externally connected device 929.

The communication device 925 is a communication interface constituted by a communication device for accessing a communication network 300, for example. The communication device 925 is, for example, a communication card for wired or wireless LAN (Local Area Network), for Bluetooth, or for WUSB (Wireless USB), a rooter for optical communication, a rooter for ADSL (Asymmetric Digital Subscriber Line), or a modem for various types of communication. This communication device 925 can transmit and receive audio signals and the like to and from the Internet or other communication devices, for example. Moreover, the communication network 12 accessed by the communication device 925 is constituted by a network connected via wire or wirelessly, or the like, and may be the Internet, home LAN, infrared ray communication, radio wave communication or satellite communication, for example.

An example of the hardware configuration which can achieve the function of the information processing apparatus 100 according to each embodiment of the present invention has been described above. Each component described above may be configured by using a general-purpose member or may be configured by hardware specialized for the function of each component. Accordingly, the hardware configuration for use can be changed appropriately according to the technical level of each time when the present embodiment is implemented.

The hardware configuration of the information processing apparatus 100 according to the first embodiment of the present invention has been described above. Next, the information processing apparatus 100 according to the first embodiment of the present invention will be described in detail.

[1-3. Detailed Description of Information Processing Apparatus]

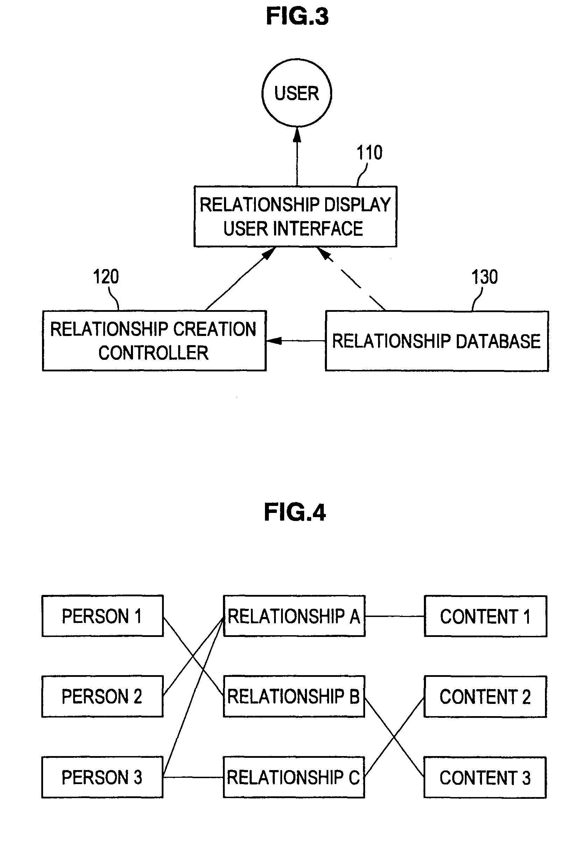

An overview of a system (an example of the information processing apparatus 100) for realizing the present embodiment is shown in FIG. 3. A relationship database 130 stores therein "persons" and "contents" as an example of the object and "relationships between persons and contents" as an example of the relationship information. A conceptual model of these is shown in FIG. 4. For example, when assuming the persons are actors, the contents are films, and the relationships are performers, a person 2 and a person 3 are the actors who appear in content 1. The relationship database 130 functions as an example of the storage unit 104 described above.

A relationship creation controller 120 determines items to be actually displayed from among entries existed in the database. For example, the relationship creation controller 120 displays a relationship A and a relationship C in order to display information related to a person 3 shown in FIG. 4. The relationship creation controller 120 functions as an example of the control unit 102 described above, for example.

A relationship display user interface 110 displays relation information created by the relationship creation controller 120 and receives an input from a user. The relationship display user interface 110 functions as an example of the control unit 102 described above, for example.

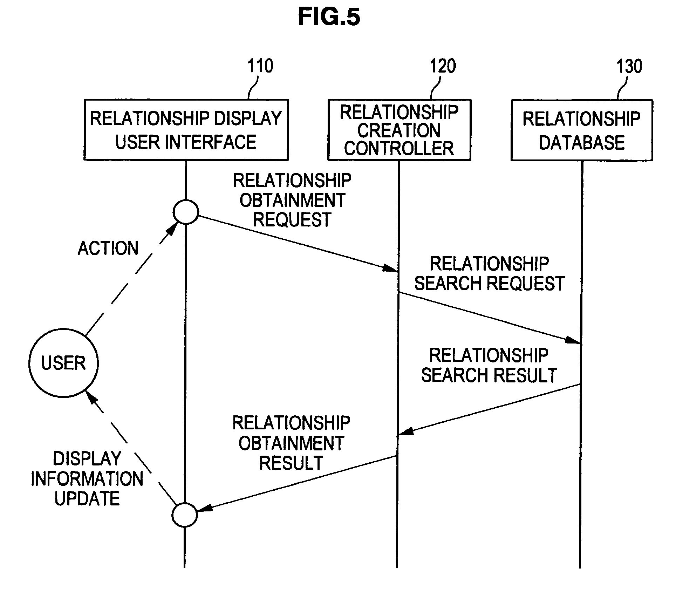

What is particularly novel in the present embodiment is an interface part for displaying a relationship. In the following, there will be described a flow from the starting part where the user actually starts an action to when user interface information is finally updated. The overall flow is shown in FIG. 5.

1. From a user's input to a query creation

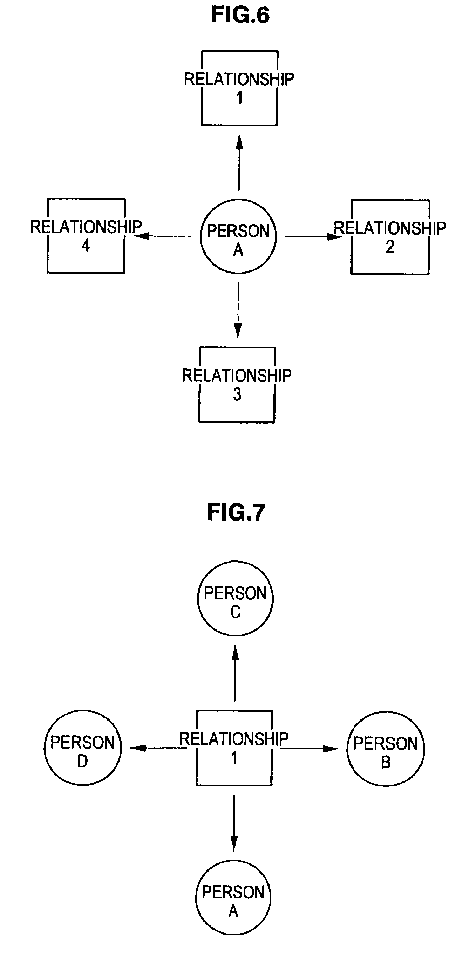

In the display area of the user interface, something like what is shown in FIG. 6 is displayed in the initial state. This shows that four different relationship words are displayed around a person A. For example, when assuming that the person is an "actor", the relationship words may include "drama the actor appears in", "movie the actor appears in", "co-star", "birthplace" and the like. Other than this, when assuming that the person is an athlete, the relationship words may include "past team of the athlete", "member of the athlete's present team", "birthplace", "athlete of the same generation" and the like. FIG. 6 is a display example centering the person A, but content A may be centered. In the present embodiment, persons and contents are separated for the sake of convenience, but since "relationship between persons" and "relationship between contents" are actually also possible, both the persons and the contents can be considered the same entity within a large framework. In the following, description will be made mainly taking "actor" as the person and "a work the actor performs in" as the content.

By an up arrow key on the input device being pressed in the condition shown in FIG. 6, the screen switches to a display shown in FIG. 7. That is, a "relationship 1" displayed in the upper part in FIG. 6 moves to the center in FIG. 7. In this way, the novel part of the present embodiment is that it is possible to trace the relationships of persons or contents only with easy operation of the input device.

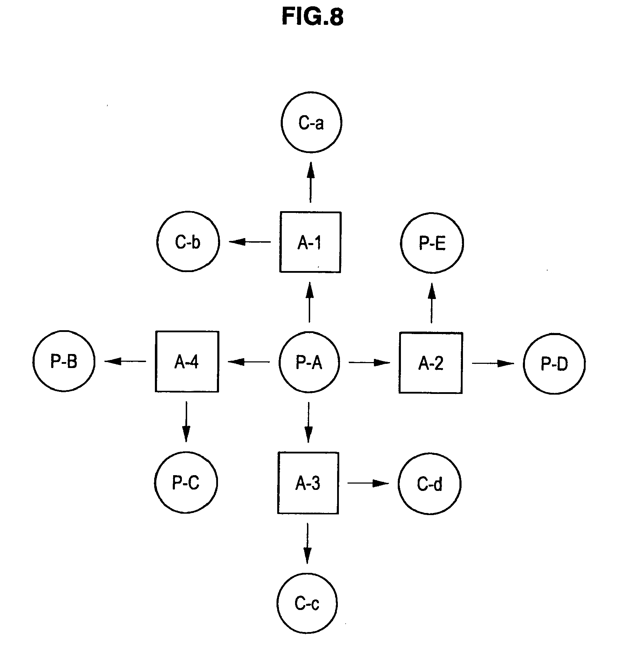

FIG. 8 shows an extended model of FIG. 6 and FIG. 7. The persons are represented by "P-", the contents are represented by "C-", and the relationships are represented by "A-". Items having an arrow therebetween indicate that they are related to each other. For example, an actor "P-A" is linked with an actor "P-C" by a relationship of drama co-star "A-4".

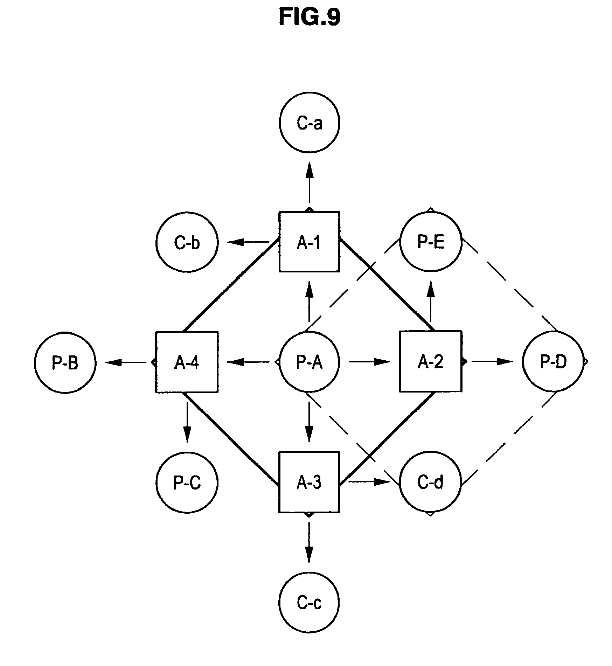

As shown in FIG. 9, a display shows basically four different relationships from A-1 to A-4 displayed centering P-A (part enclosed by a heavy line). By a right arrow key being pressed in this condition, the display switches to a display centering A-2 enclosed by a dashed line. The information processing apparatus 100 according to the present embodiment has characteristics in which a link continues from a person to a relationship and from a relationship to content, only with the operation of arrow keys.

Triggered mainly by an input by an arrow key, the relationship creation controller 120 searches the database and determines what is to be displayed by the relationship display user interface 110. In FIG. 5, it leads to a relationship obtainment request and a relationship search request after the input by the arrow key is given as the user's action.

In the relationship obtainment request, a "keyword" which is positioned at the center of the screen on the user interface and a "depth" to which information is required are used as query. For example, in FIG. 9, in the process in which the center of the screen switches from the part enclosed by a heavy line to the part enclosed by a dashed line by RIGHT button being pressed, "keyword = A-2, depth = 2" is created as a query.

The depth has a close relationship with the area that can be displayed, and if it is desired to display only four relationships around a person as shown in FIG. 6, "depth = 1" is good enough, and if it is desired to display a little wider area as shown in FIG. 8, "depth = 2" is better, for example. For displaying an even wider range, depth may be set to n, "depth = n (n is one or more)". Moreover, even when "depth = 1" is enough as a display area, a query can be created with "depth 2 or more" for the purpose of cache to improve the subsequent responsiveness.

2. Query on the database and a result reply

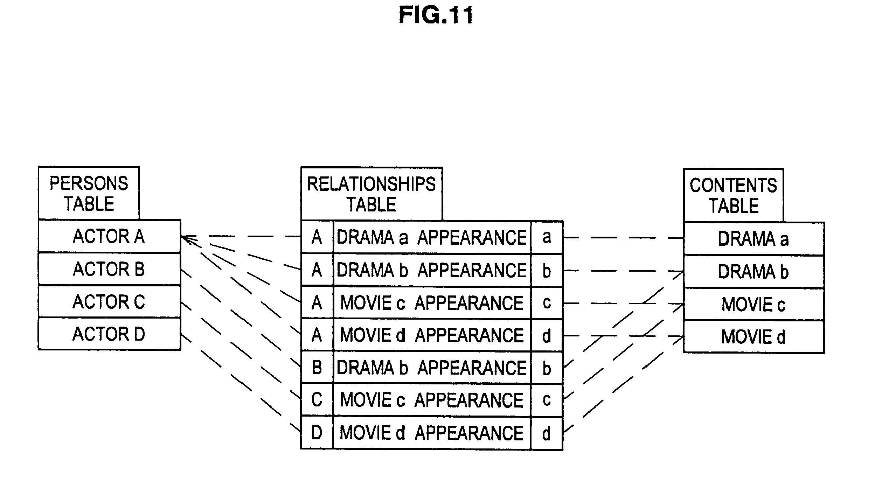

An example of data stored in the database is shown in FIG. 11. It is composed of a total of three different tables; tables for storing persons and contents respectively, and a table for storing relationships between a person and content. A relationship name is stored in each entry of the relationships table having a pointer to a person or content. For example, FIG.11 shows that an actor B appears in a drama b.

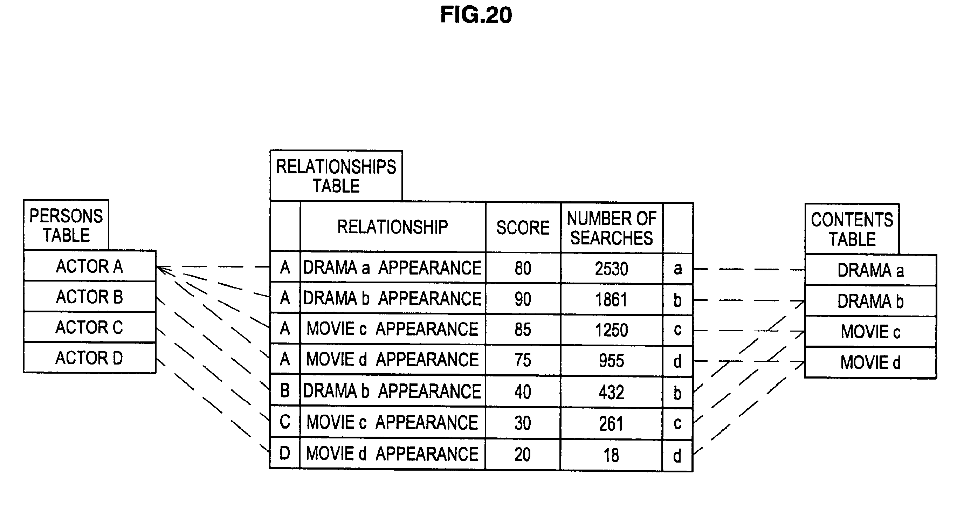

The relationships table holds data scores and the numbers of searches in order to determine a display priority described later. FIG. 20 is a diagram showing a composition example of the relationships table holding data scores and the numbers of searches. The data score is a score that a data itself has, and when the relationship name is "appearance", a star gains a high score. The number of searches is the number of times the data is searched, and the more the number of times is, the more popular the item can be considered. In this way, the relationship creation controller 120 determines the display priority based on the data and a user history. When assuming the display priority is P, the score is Sc, and the number of searches is Sr, an equation as below can be used for calculation ($\alpha$, $\beta$ are arbitrary integers).

$$P = (\alpha \times Sc \;+\; \beta \times Sr) \;/\; (\alpha + \beta) \text{ --- (Equation 1)}$$

The query created in the relationship obtainment request is developed to the relationship search request, and the relationship creation controller 120 can search the database and can obtain necessary information. The relationship search request is a SQL sentence in case where the database is a relational database which is commonly used.

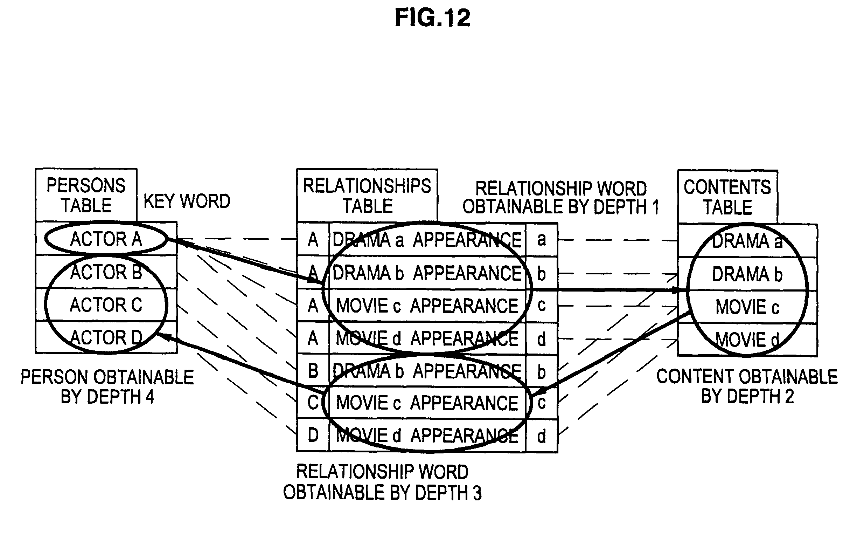

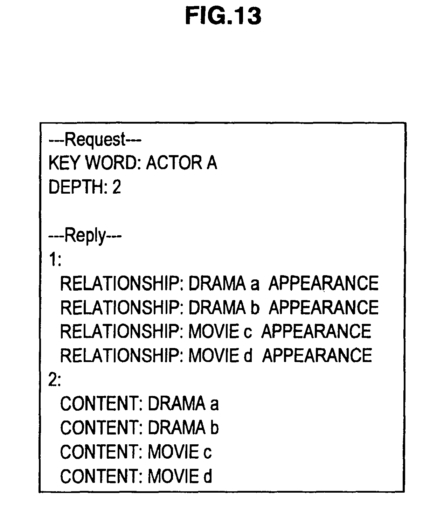

FIG. 12 shows that obtainable information changes from depth 1 to depth 4, taking an actor A as the starting point. For example, when using "key word = actor A, depth = 2" as a query, the relationship search result is like what is shown in FIG. 13.

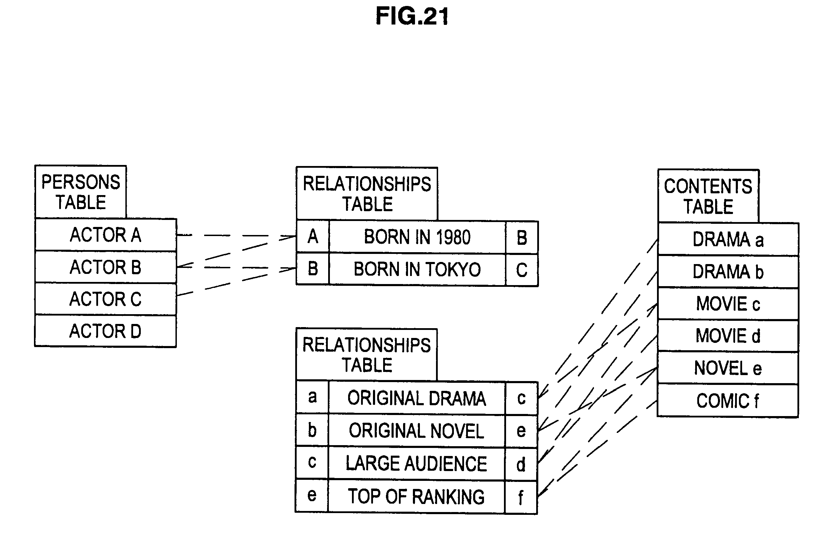

FIG. 21 is an example of relationship tables showing relationships between "actors and actors" and "contents and contents" respectively. Although the relationship tables may be put together into one table, the two relationship tables for persons and persons and for contents and contents are prepared in FIG. 21. For example, it is shown that movies c and d have a relationship of "movie with a large audience".

3. Search result display method

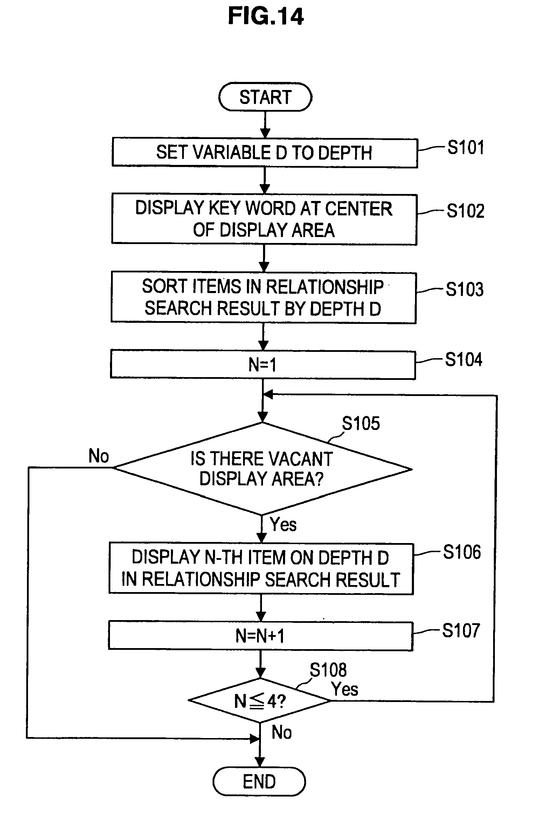

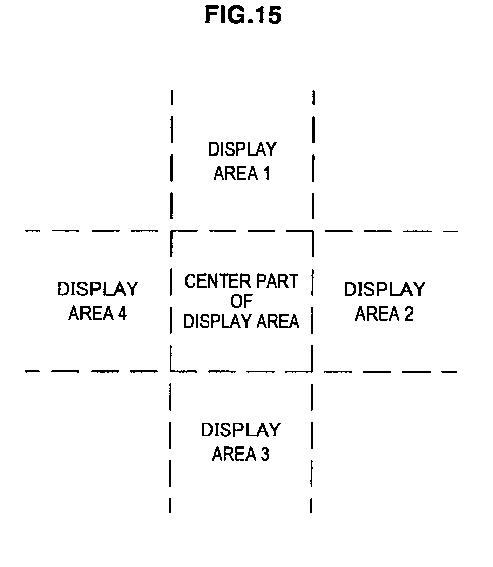

In response to the search result in FIG. 13, the relationship creation controller 120 selects items to be displayed and reports them to the relationship display user interface 110. FIG. 14 is an algorism for display, and FIG. 15 shows a display area.

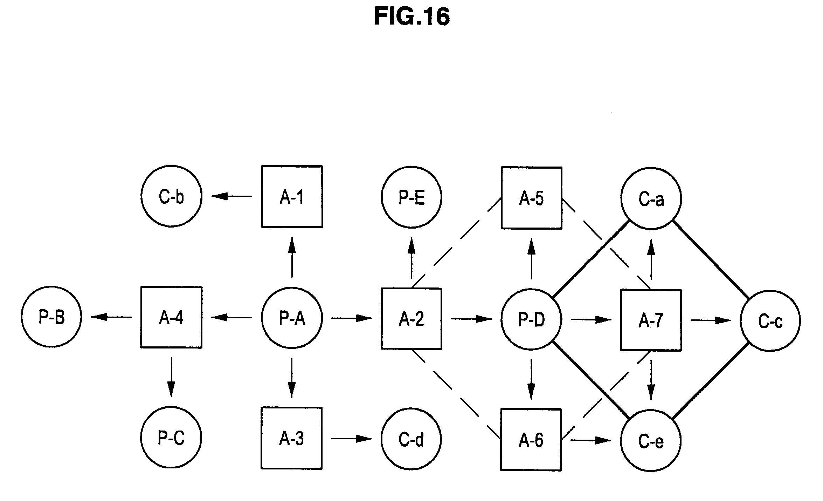

In FIG. 6, four different relationship words are arranged around a key word: person A. Although it is possible to display not only four words but also eight or sixteen words, about four words is appropriate since four directional buttons are used in a general input method. Also from the viewpoint of display, if words are too many, there is difficulty of viewing, so that if there are four or more words, it is necessary to figure out a good way to display them such as spatially arranging them in three-dimension. In a flowchart shown in FIG. 14, the display area are four different areas on the right, left, top, bottom from the center. In the following, FIG. 14 will be described in detail, taking FIG. 16 as an example.

A part enclosed by a dashed line in FIG. 16 is an example of a screen display at a certain moment. Four relationship words are displayed around a person P-D. By the right arrow key being pressed at this point, the screen display is transferred to a display centering a relationship A-7 enclosed by a heavy line. That is, the relationship creation controller 120 searches the database using the relationship A-7 as the key word, and obtains a result containing contents C-a, C-c, C-e as the relationship search result.

When the relationship search result is returned from the database, the relationship display user interface 110 calculates display objects following the flowchart shown in FIG. 14. First, in this example, the depth is set to 1 (=D) and only the items directly linked with the relationship A-7 are displayed. The relationship display user interface 110 displays the relationship A-7 which is the key word at the center of the display area shown in FIG. 15. Next, the relationship display user interface 110 sorts objects in the relationship search result by depth 1. The sorting is done as a preparation for displaying effective items in a limited display space, and priority is given to "audience ratings" in the case of drama, "attendance" in the case of movie, and "popularity stakes" in the case of person, for example. Furthermore, the relationship display user interface 110 displays items in order from display areas 1 to 4, since the center of the screen display is transferred from P-D to A-7 in this example, the display area 4 is not vacant. It is important not to use the display area 4 in order to make the information path explicit. The relationship display user interface 110 displays 1st to 3rd of the items sorted from the relationship search result in order, using the display areas from 1 to 3.

When there are more items than vacant display areas in the relationship search result, the relationship display user interface 110 holds items that could not be displayed and keeps them available to be displayed again by an update operation. That is, when there are contents C-x, C-y, and C-z whose priorities are second to that of C-a, C-c, and C-e, the C-a, C-c, and C-e are replaced by the C-x, C-y, and C-z by an update operation. For example, there can be considered a system in which updating is performed by pressing a button. When it is desired to display items until depth 2, the relationship display user interface 110 sets the depth to 2 (D=2) and repeats processing shown in FIG. 14. The same applies to the case where the depth = N, hereafter.

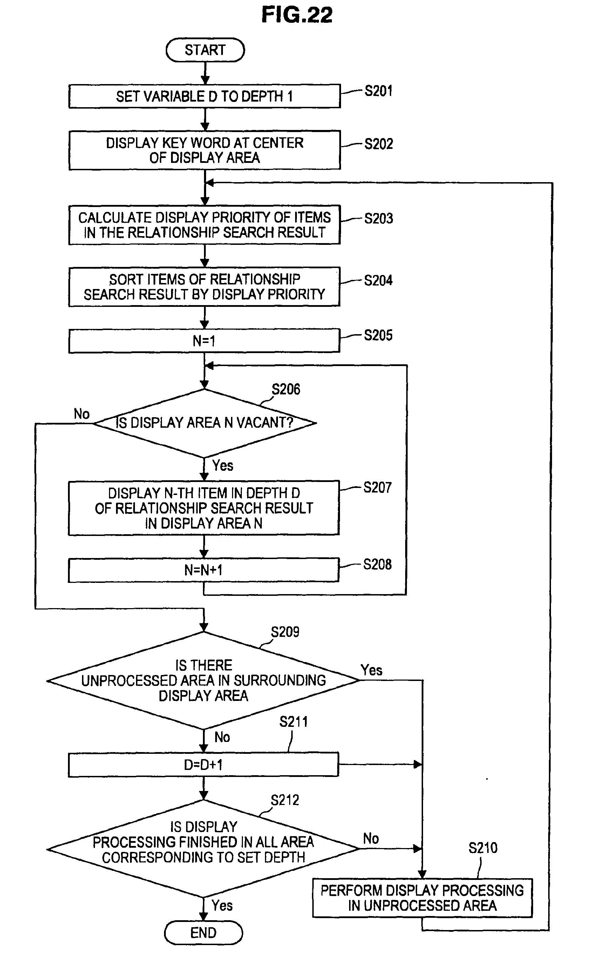

FIG. 22 is a flowchart showing a processing flow for display according to depth. The relationship display user interface 110 determines display priorities of the relationship search result by using Equation 1 described above. A surrounding display area is adjacent areas in the display area, and surrounding display areas of the center part of the display area shown in FIG. 15 correspond to display areas 1 to 4, and surrounding display areas of the display area 1 is a surrounding adjacent part thereof. The relationship display user interface 110 starts processing from depth 1, and repeats the display processing until it finishes the processing in all areas corresponding to the set depth.

4. Holding method of a user's search history

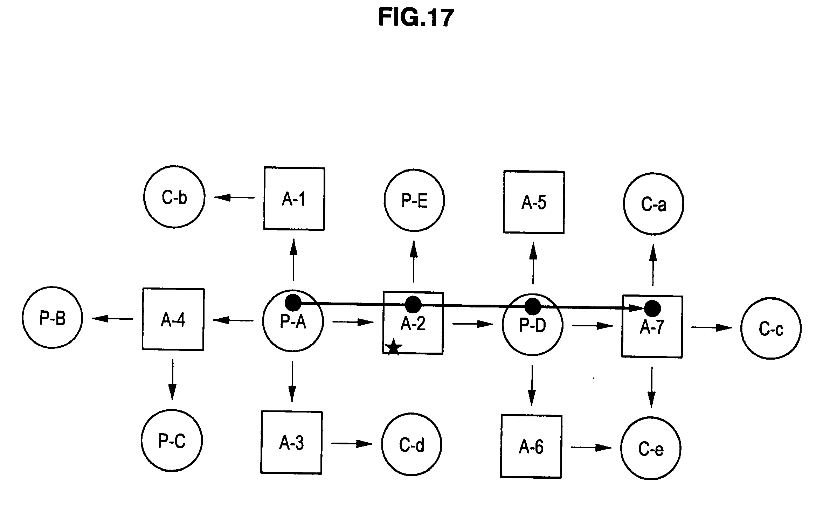

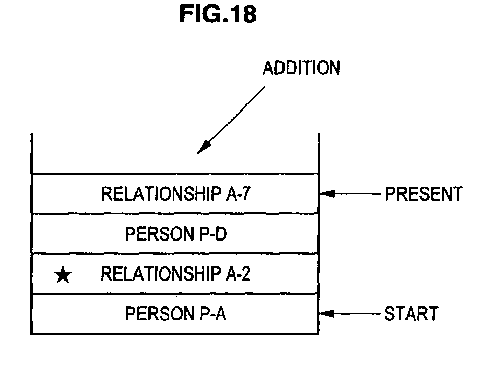

FIG. 17 shows a process in which the user begins a search from a person P-A, and presses a right button three times, and thereby the center is transferred from a relationship A-2 to a person P-D and to a relationship A-7 with each of whose surrounding items being displayed. FIG. 18 is a diagram showing a path stack from the start to the present. The relationship display user interface 110 can record a path, for example in the storage unit 104 described above, with a simple operation of adding an item displayed on the present position to the path stack when the center of display proceeds from the present position, and of taking out an item from the path stack when the center of display returns to the previous position. When the center of screen which is now at the relationship A-7 returns to the starting position, for example, the relationship display user interface 110 takes out items one by one from the stack and display them one by one at the center of display area, and ends the operation when the stack is empty.

Moreover, when the relationship A-2 is interesting to the user, the user can put a mark on it so that he/she can return thereto. This is called a bookmark represented by a star. The item is bookmarked also in the path stack. The bookmark function enables comfortable operation such as that an item on the top of the stack can be changed from A-7 to P-D by pressing a left button, and to A-2 by simultaneously pressing X button and the left button.

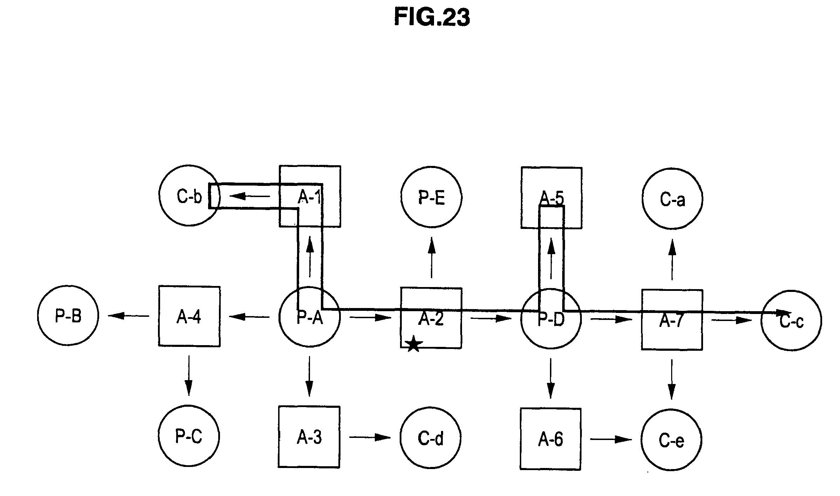

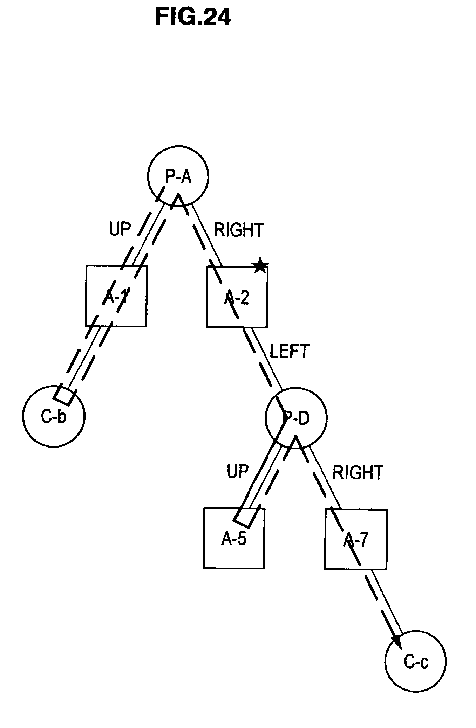

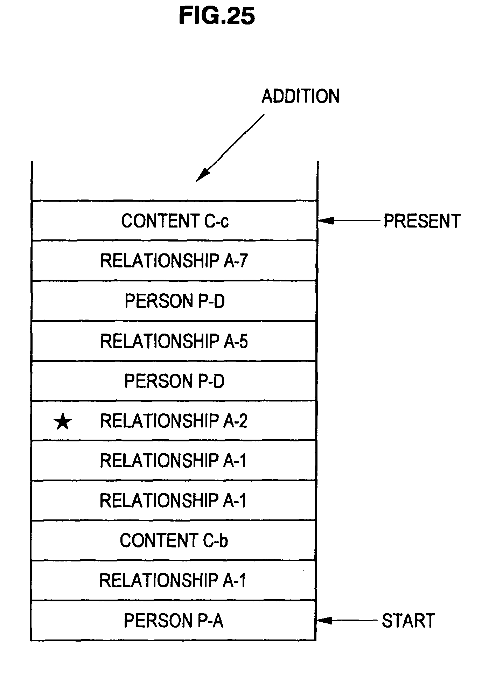

FIG. 23 is a diagram showing a variation of the example shown in FIG. 17. The user begins a search from a person P-A, and returns to P-A after searching for a content C-b, and further returns to P-D after searching for a relationship A-5, and reaches a content C-c at the end. This history is shown in a tree diagram in FIG. 24. Moreover, it is also shown in a stack in FIG. 25. In the tree diagram shown in FIG. 24, the relationship between direction key and branch is also held as data, which therefore enables designating "the closest favorite item on the left side" from a certain node.

There is characteristic that even when the center of display returns to the previous position, the history is added to the stack without taking out the item from the stack. By this, when returning to a "favorite" at the end. it is possible to trace the history while taking items one by one from the stack

The information processing apparatus 100 according to the first embodiment of the present invention has been described in detail as above.

< 2. Variation of Present Embodiment >

Although a preferred embodiment of the present invention is described in the foregoing with reference to the drawings, the present invention is not limited thereto. It should be understood by those skilled in the art that various modifications, combinations, subcombinations and alterations may occur depending on design requirements and other factors insofar as they are within the scope of the appended claims or the equivalents thereof.

According to the present embodiment, it is possible to construct a system for displaying relationships between, for example, persons and contents, with which the user can easily understand the relationships visually and can easily search for the related persons or contents. Even without rich interface such as a mouse or a keyboard, the user can comfortably search for persons or contents while tracing the relationships. Even a distant relationship such as direct relationship is not established clearly can be shown visually by changing the size of the screen. Although a system in the related art sometimes makes difficult to grasp the relationships when the user continues searching, the present embodiment visually makes clear how objects are related.

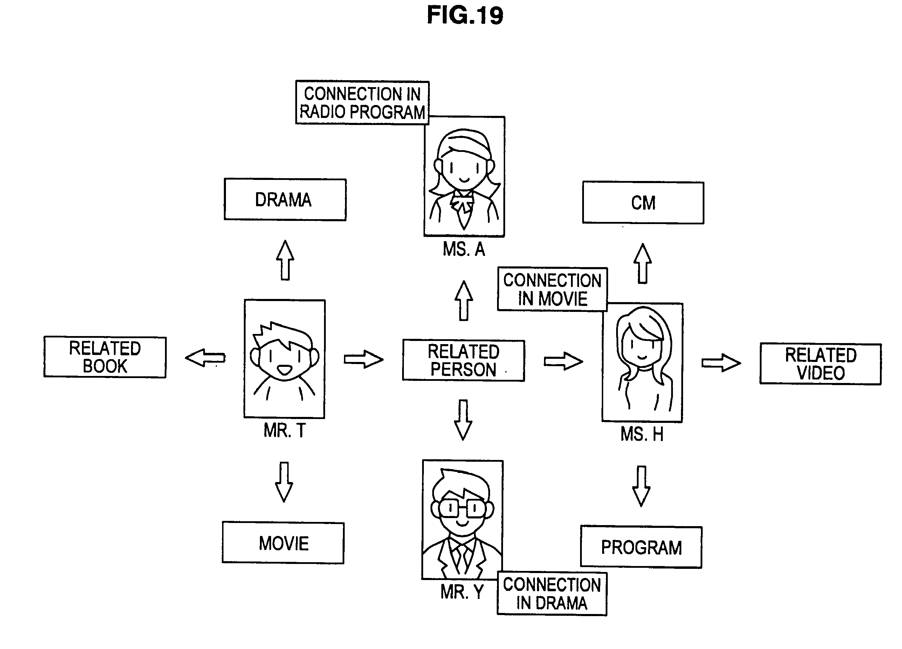

FIG. 19 is a screen display image diagram when the information processing apparatus according to the present embodiment is in use.

**[0086]** [0000] The present application contains subject matter related to that disclosed in Japanese Priority Patent Application JP 2009-015704 filed in the Japan Patent Office on January 27, 2009, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. An information processing apparatus comprising:

   a display unit having a display screen as well as capable of displaying information on the display screen;
   an input unit capable of receiving an input of information;
   a storage unit for storing therein a plurality of relation information in which object information indicating an object is correlated with relationship information indicating a relationship of the object with other objects, and selected information which is the object information or the relationship information currently selected by a user; and
   a control unit for causing the display unit to display the selected information stored in the storage unit at a selected information display position, as well as causing the display unit to display a first selection candidate information, which is one of the object information and the relationship information correlated with the selected information, at a first candidate information display position which is a position departing a predetermined distance from the selected information display position in a predetermined first direction, and to display a second selection candidate information, which is one of the object information and the relationship information correlated with the selected information other than the first selection candidate information, at a second candidate information display position which is a position departing a predetermined distance in a predetermined second direction opposite from the first direction.

2. The information processing apparatus according to claim 1,
   wherein when receiving an input of information for designating the first direction via the input unit,
   the control unit causes the display unit to display the selected information stored in the storage unit at the second selection candidate information display position, as well as causes the display unit to update the selected information stored in the storage unit by replacing the selected information with the first selection candidate information and to display the updated selected information at the selected information display position, and to display at the first selection candidate information display position one of the object information and the relationship information correlated with the selected information other than the information displayed at the second selection candidate information display position.

3. The information processing apparatus according to claim 2,
   wherein
   the storage unit stores therein the relationship information and the object information along with a priority thereof to be displayed by the display unit, and
   the control unit determines information with the highest priority as information to be displayed at the first selection candidate information display position, among the object information or the relationship information correlated with the selected information other than the information displayed at the second selection candidate information display position.

4. The information processing apparatus according to claim 1,
   wherein when receiving an input of information for updating selection candidate information via the input unit,

the control unit causes the display unit to update the information displayed at the first selection candidate information display position by replacing the information displayed at the first selection candidate information display position with one of the object information and the relationship information correlated with the selected information other than the information displayed at the first selection candidate information display position and the information displayed at the second selection candidate information display position.

5. The information processing apparatus according to claim 2,
   wherein when receiving the input of information for designating the first direction via the input unit,
   the control unit further causes the display unit to display a trajectory indicating movement from the second selection candidate information display position to the selected information display position.

6. The information processing apparatus according to claim 2,
   wherein
   the storage unit is capable of further storing therein selection history information to which the selected information is added, and
   when updating the selected information stored in the storage unit,
   the control unit adds the selected information to the selection history information stored in the storage unit, and
   when receiving an input of information indicating user's favorite via the input unit,
   the control unit causes the storage unit to store therein bookmark information indicating the user's favorite with the correlated selected information added to the selection history information, and
   when receiving an input of information for returning to the favorite information via the input unit,
   the control unit deletes the selected information in the inverse order they were added, up to before the selected information correlated with the bookmark information, as well as causes the display unit to display the selected information correlated with the bookmark information at the selected information display position.

7. The information processing apparatus according to claim 2,
   wherein when receiving an input of information for designating the second direction via the input unit,
   the control unit causes the display unit to display the selected information stored in the storage unit at the first selection candidate information display position, as well as causes the display unit to update the selected information stored in the storage unit by replacing the selected information with the second selection candidate information and to display the updated selected information at the selected information display position, and to display at the second selection candidate information display position one of the object information and the relationship information correlated with the selected information other than the information displayed at the first selection candidate information display position.

8. The information processing apparatus according to claim 1,
   wherein
   the control unit further causes the display unit to display a third selection candidate information, which is one of the object information and the relationship information correlated with the selected information other than the first selection candidate information and the second selection candidate information, at a third selection candidate information display position which is a position departing a predetermined distance from the selected information display position in a predetermined third direction, and to display a fourth selection candidate information, which is one of the object information and the relationship information correlated with the selected information other than the first selection candidate information, the second selection candidate information, and the third selection candidate information, at a fourth selection candidate information display position which is a position departing a predetermined distance in a predetermined fourth direction opposite from the third direction.

9. The information processing apparatus according to claim 8,
   wherein when receiving an input of information for designating the first direction via the input unit,
   the control unit causes the display unit to display the selected information stored in the storage unit at the second selection candidate information display position, as well as causes the display unit to update the selected information stored in the storage unit by replacing the selected information with the first selection candidate information and to display the updated selected information at the selected information display position, to display at the first selection candidate information display position one of the object information and the relationship information correlated with the selected information other than the information displayed at the second selection candidate information display position, to display at the third selection candidate information display position one of the object information and the relationship information correlated with the selected information other than the information displayed at the first selection candidate information display position and the information displayed at the second selection candidate information display position, and to display at the fourth selection candidate information display position one of the object information and the relationship information correlated with the selected information other than the information displayed at the first selection candidate information display position, the information displayed at the second selection candidate information display position, and the information displayed at the third selection candidate information display position.

10. The information processing apparatus according to claim 8,
wherein
the storage unit stores therein the relationship information and the object information along with a priority thereof to be displayed by the display unit, and
the control unit causes the display unit to display information correlated with the priority in descending order at the first selection candidate information display position, the third selection candidate information display position, and the fourth selection candidate information display position, among the object information or the relationship information correlated with the selected information other than the information displayed at the second selection candidate information display position.

11. The information processing apparatus according to claim 8,
wherein
the control unit further causes the display unit to display the object information or the relationship information correlated with the first selection candidate information at positions departing a predetermined distance from the first selection candidate information display position respectively in the first direction and the fourth direction, to display the object information or the relationship information correlated with the second selection candidate information at positions departing a predetermined distance from the second selection candidate information display position respectively in the second direction and the third direction, to display the object information or the relationship information correlated with the third selection candidate information at positions departing a predetermined distance from the third selection candidate information display position respectively in the first direction and the third direction, and to display the object information or the relationship information correlated with the fourth selection candidate information at positions departing a predetermined distance from the fourth selection candidate information display position respectively in the second direction and the fourth direction.

12. An information processing method executed by a control unit of an information processing apparatus including a display unit having a display screen as well as capable of displaying information on the display screen, an input unit capable of receiving an input of information, a storage unit for storing therein a plurality of relation information in which object information indicating an object is correlated with relationship information indicating a relationship of the object with other objects, and selected information which is the object information or the relationship information currently selected by a user, and the control unit,
comprising the steps of:

causing the display unit to display the selected information stored in the storage unit at a selected information display position which is a predetermined position on the display screen, as well as causing the display unit to display a first selection candidate information, which is one of the object information and the relationship information correlated with the selected information, at a first candidate information display position which is a position departing a predetermined distance from the selected information display position in a predetermined first direction; and
causing the display unit to display a second selection candidate information, which is one of the object information and the relationship information correlated with the selected information other than the first selection candidate information, at a second candidate information display position which is a position departing a predetermined distance in a predetermined second direction opposite from the first direction.

13. A program for causing a computer to function as an information processing apparatus comprising:

a display unit having a display screen as well as capable of displaying information on the display screen;
an input unit capable of receiving an input of information;
a storage unit for storing therein a plurality of relation information in which object information indicating an object is correlated with relationship information indicating a relationship of the object with other objects, and selected information which is the object information or the relationship information currently selected by a user; and
a control unit for causing the display unit to display the selected information stored in the storage unit at a selected information display position, as well as causing the display unit to display a first selection candidate information, which is one of the object information and the relationship information correlated with the selected information, at a first candidate information display position which is a position departing a predetermined distance from the selected information display position in a predetermined first direction, and to display a second selection candidate information, which is one of the object information and the relationship information correlated with the selected information other than the first selection candidate information, at a second candidate information display position which is a position departing a predetermined distance in a predetermined second direction opposite from the first direction.

# FIG.1

```
                                    ~100

┌─────────────────────────────────────────────────────────┐
│         ~101            ~102              ~103            │
│  ┌──────────┐     ┌──────────┐      ┌──────────┐        │
│  │  INPUT   │◄───►│ CONTROL  │◄────►│ DISPLAY  │        │
│  │  UNIT    │     │  UNIT    │      │  UNIT    │        │
│  └──────────┘     └──────────┘      └──────────┘        │
│                        ▲                                 │
│                        │    ~104                         │
│                        ▼                                 │
│                  ┌──────────┐                           │
│                  │ STORAGE  │                           │
│                  │  UNIT    │                           │
│                  └──────────┘                           │
└─────────────────────────────────────────────────────────┘
```

**FIG.2**

```
        ┌─────────┐      ┌─────────┐      ┌─────────┐
        │   901   │      │   903   │      │   905   │
        │   CPU   │      │   ROM   │      │   RAM   │
        └────┬────┘      └────┬────┘      └────┬────┘
             ↕                ↕                ↕
    ◁═══════════════════════════════════════════════════▷  907
                              ↕
                        ┌──────────┐  909
                        │  BRIDGE  │
                        └──────────┘
                              ↕
    ◁═══════════════════════════════════════════════════▷  911
                              ↕
         ┌─────913──────────────────────────────────────┐
         │                 INTERFACE                     │
         └──────────────────────────────────────────────┘
           ↕        ↕        ↕        ↕        ↕        ↕
      ┌────────┐┌────────┐┌────────┐┌──────┐┌────────┐┌───────────┐
      │  915   ││  917   ││  919   ││ 921  ││  923   ││   925     │
      │ INPUT  ││ OUTPUT ││STORAGE ││DRIVE ││CONNECT ││COMMUNICAT.│
      │ DEVICE ││ DEVICE ││ DEVICE ││      ││ PORT   ││  DEVICE   │
      └────────┘└────────┘└────────┘└──┬───┘└───┬────┘└─────┬─────┘
                                       ↕        ↕           ↕
                                  ┌─────────┐┌─────────┐
                                  │   927   ││   929   │
                                  │REMOVABLE││EXTERNALLY│
                                  │RECORDING││CONNECTED │
                                  │ MEDIUM  ││ DEVICE   │
                                  └─────────┘└─────────┘
```

100

200

EP 2 216 745 A1

# FIG.3

USER

110

RELATIONSHIP DISPLAY
USER INTERFACE

120

RELATIONSHIP CREATION
CONTROLLER

130

RELATIONSHIP DATABASE

# FIG.4

| PERSON 1 | RELATIONSHIP A | CONTENT 1 |
| PERSON 2 | RELATIONSHIP B | CONTENT 2 |
| PERSON 3 | RELATIONSHIP C | CONTENT 3 |

# FIG.5

110
RELATIONSHIP DISPLAY
USER INTERFACE

120
RELATIONSHIP
CREATION
CONTROLLER

130
RELATIONSHIP
DATABASE

RELATIONSHIP
OBTAINMENT
REQUEST

ACTION

USER

RELATIONSHIP
SEARCH REQUEST

RELATIONSHIP
SEARCH RESULT

RELATIONSHIP
OBTAINMENT
RESULT

DISPLAY
INFORMATION
UPDATE

## FIG.6

## FIG.7

# FIG.8

# FIG.9

# FIG.10

# FIG.11

| PERSONS<br>TABLE |
|---|
| ACTOR A |
| ACTOR B |
| ACTOR C |
| ACTOR D |

| RELATIONSHIPS<br>TABLE | | |
|---|---|---|
| A | DRAMA a APPEARANCE | a |
| A | DRAMA b APPEARANCE | b |
| A | MOVIE c APPEARANCE | c |
| A | MOVIE d APPEARANCE | d |
| B | DRAMA b APPEARANCE | b |
| C | MOVIE c APPEARANCE | c |
| D | MOVIE d APPEARANCE | d |

| CONTENTS<br>TABLE |
|---|
| DRAMA a |
| DRAMA b |
| MOVIE c |
| MOVIE d |

# FIG.12

PERSONS TABLE    KEY WORD

| | |
|---|---|
| ACTOR A | |
| ACTOR B | |
| ACTOR C | |
| ACTOR D | |

PERSON OBTAINABLE
BY DEPTH 4

RELATIONSHIPS TABLE    RELATIONSHIP WORD OBTAINABLE BY DEPTH 1

| | | |
|---|---|---|
| A | DRAMA a APPEARANCE | a |
| A | DRAMA b APPEARANCE | b |
| A | MOVIE c APPEARANCE | c |
| A | MOVIE d APPEARANCE | d |
| B | DRAMA b APPEARANCE | b |
| C | MOVIE c APPEARANCE | c |
| D | MOVIE d APPEARANCE | d |

RELATIONSHIP WORD
OBTAINABLE BY DEPTH 3

CONTENTS TABLE

| |
|---|
| DRAMA a |
| DRAMA b |
| MOVIE c |
| MOVIE d |

CONTENT OBTAINABLE
BY DEPTH 2

EP 2 216 745 A1

# FIG.13

```
---Request---
KEY WORD: ACTOR A
DEPTH: 2

---Reply---
1:
  RELATIONSHIP: DRAMA a  APPEARANCE
  RELATIONSHIP: DRAMA b  APPEARANCE
  RELATIONSHIP: MOVIE c  APPEARANCE
  RELATIONSHIP: MOVIE d  APPEARANCE
2:
  CONTENT: DRAMA a
  CONTENT: DRAMA b
  CONTENT: MOVIE c
  CONTENT: MOVIE d
```

# FIG.14

```
                    ( START )
                        │
                        ▼
        ┌──────────────────────────────┐
        │   SET VARIABLE D TO DEPTH     │──── S101
        └──────────────────────────────┘
                        │
                        ▼
        ┌──────────────────────────────┐
        │  DISPLAY KEY WORD AT CENTER   │──── S102
        │      OF DISPLAY AREA          │
        └──────────────────────────────┘
                        │
                        ▼
        ┌──────────────────────────────┐
        │  SORT ITEMS IN RELATIONSHIP   │──── S103
        │    SEARCH RESULT BY DEPTH D   │
        └──────────────────────────────┘
                        │
                        ▼
        ┌──────────────────────────────┐
        │            N=1               │──── S104
        └──────────────────────────────┘
                        │
                        ▼ ◄───────────────────────┐
                                 S105             │
                      ╱─────────────────╲         │
             No      ╱   IS THERE VACANT  ╲        │
          ◄─────────       DISPLAY AREA?          │
                     ╲                   ╱         │
                      ╲─────────────────╱          │
                        │ Yes                      │
                        ▼                          │
        ┌──────────────────────────────┐           │
        │  DISPLAY N-TH ITEM ON DEPTH D │──── S106  │
        │  IN RELATIONSHIP SEARCH RESULT│           │
        └──────────────────────────────┘           │
                        │                          │
                        ▼                          │
        ┌──────────────────────────────┐           │
        │            N=N+1             │──── S107   │
        └──────────────────────────────┘           │
                        │      S108                 │
                        ▼       Yes                 │
                  ╱───────────╲ ───────────────────┘
                 ╱   N ≦ 4?    ╲
                 ╲             ╱
                  ╲───────────╱
                        │ No
                        ▼
                    ( END )
```

# FIG.15

DISPLAY
AREA 1

DISPLAY
AREA 4

CENTER PART
OF
DISPLAY AREA

DISPLAY
AREA 2

DISPLAY
AREA 3

**FIG.16**

FIG.17

EP 2 216 745 A1

# FIG.18

ADDITION

| | |
|---|---|
| RELATIONSHIP A-7 | ◄——— PRESENT |
| PERSON P-D | |
| ★ RELATIONSHIP A-2 | |
| PERSON P-A | ◄——— START |

# FIG.19

CONNECTION IN RADIO PROGRAM

DRAMA

MS. A

CM

CONNECTION IN MOVIE

RELATED BOOK ← MR. T → RELATED PERSON → MS. H → RELATED VIDEO

MOVIE

MR. Y

CONNECTION IN DRAMA

PROGRAM

EP 2 216 745 A1

## FIG.20

| PERSONS TABLE |
|---|
| ACTOR A |
| ACTOR B |
| ACTOR C |
| ACTOR D |

**RELATIONSHIPS TABLE**

| | RELATIONSHIP | SCORE | NUMBER OF SEARCHES | |
|---|---|---|---|---|
| A | DRAMA a  APPEARANCE | 80 | 2530 | a |
| A | DRAMA b  APPEARANCE | 90 | 1861 | b |
| A | MOVIE c  APPEARANCE | 85 | 1250 | c |
| A | MOVIE d  APPEARANCE | 75 | 955 | d |
| B | DRAMA b  APPEARANCE | 40 | 432 | b |
| C | MOVIE c  APPEARANCE | 30 | 261 | c |
| D | MOVIE d  APPEARANCE | 20 | 18 | d |

| CONTENTS TABLE |
|---|
| DRAMA a |
| DRAMA b |
| MOVIE c |
| MOVIE d |

EP 2 216 745 A1

# FIG.21

EP 2 216 745 A1

| PERSONS TABLE |
| --- |
| ACTOR A |
| ACTOR B |
| ACTOR C |
| ACTOR D |

| RELATIONSHIPS TABLE | | |
| --- | --- | --- |
| A | BORN IN 1980 | B |
| B | BORN IN TOKYO | C |

| RELATIONSHIPS TABLE | | |
| --- | --- | --- |
| a | ORIGINAL DRAMA | c |
| b | ORIGINAL NOVEL | e |
| c | LARGE AUDIENCE | d |
| e | TOP OF RANKING | f |

| CONTENTS TABLE |
| --- |
| DRAMA a |
| DRAMA b |
| MOVIE c |
| MOVIE d |
| NOVEL e |
| COMIC f |

# FIG.22

```
                    ( START )
                        │
                        ▼
        ┌───────────────────────────────┐
        │ SET VARIABLE D TO DEPTH 1      │──── S201
        └───────────────────────────────┘
                        │
                        ▼
        ┌───────────────────────────────┐
        │ DISPLAY KEY WORD AT CENTER     │──── S202
        │ OF DISPLAY AREA                │
        └───────────────────────────────┘
                        │
                        ▼◄──────────────────────────────┐
        ┌───────────────────────────────┐               │
        │ CALCULATE DISPLAY PRIORITY OF  │──── S203      │
        │ ITEMS IN THE RELATIONSHIP      │               │
        │ SEARCH RESULT                  │               │
        └───────────────────────────────┘               │
                        │                                │
                        ▼                                │
        ┌───────────────────────────────┐               │
        │ SORT ITEMS OF RELATIONSHIP     │──── S204      │
        │ SEARCH RESULT BY DISPLAY       │               │
        │ PRIORITY                       │               │
        └───────────────────────────────┘               │
                        │                                │
                        ▼                                │
        ┌───────────────────────────────┐               │
        │ N=1                           │──── S205      │
        └───────────────────────────────┘               │
                        │                                │
                        ▼◄──────────────┐                │
                      S206              │                │
          No   ◇───────────────────◇   │                │
        ◄──────  IS DISPLAY AREA N      │                │
                 VACANT?                 │                │
                 ◇───────────────────◇  │                │
                        │ Yes           │                │
                        ▼               │                │
        ┌───────────────────────────────┐               │
        │ DISPLAY N-TH ITEM IN DEPTH D   │──── S207      │
        │ OF RELATIONSHIP SEARCH RESULT  │               │
        │ IN DISPLAY AREA N              │               │
        └───────────────────────────────┘               │
                        │               │                │
                        ▼               │                │
        ┌───────────────────────────────┐               │
        │ N=N+1                         │──── S208      │
        └───────────────────────────────┘               │
                        └───────────────┘                │
                        │                                │
                        ▼                                │
                      S209                               │
          ◇─────────────────────────◇    Yes            │
          ◇  IS THERE UNPROCESSED    ◇─────────┐         │
          ◇  AREA IN SURROUNDING     ◇         │         │
          ◇  DISPLAY AREA            ◇         │         │
          ◇─────────────────────────◇         │         │
                        │ No    S211           │         │
                        ▼                      │         │
        ┌───────────────────────────────┐     │         │
        │ D=D+1                         │─────┤         │
        └───────────────────────────────┘     │         │
                        │                      │         │
                        ▼    S212              │         │
          ◇─────────────────────────◇  No      │         │
          ◇  IS DISPLAY PROCESSING   ◇─────────┤         │
          ◇  FINISHED IN ALL AREA    ◇         │         │
          ◇  CORRESPONDING TO SET    ◇         ▼         │
          ◇  DEPTH                   ◇   ┌──────────────────────┐
          ◇─────────────────────────◇   │ PERFORM DISPLAY      │── S210
                        │ Yes           │ PROCESSING IN        │
                        ▼               │ UNPROCESSED AREA     │
                    ( END )             └──────────────────────┘
                                                 │
                                                 └──────────┘
```

FIG.23

EP 2 216 745 A1

# FIG.24

# FIG.25

ADDITION

| | |
|---|---|
| CONTENT C-c | ◄——— PRESENT |
| RELATIONSHIP A-7 | |
| PERSON P-D | |
| RELATIONSHIP A-5 | |
| PERSON P-D | |
| ★ RELATIONSHIP A-2 | |
| RELATIONSHIP A-1 | |
| RELATIONSHIP A-1 | |
| CONTENT C-b | |
| RELATIONSHIP A-1 | |
| PERSON P-A | ◄——— START |

Europäisches
Patentamt

European
Patent Office

Office européen
des brevets

**EUROPEAN SEARCH REPORT**

Application Number

EP 09 25 2844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claimed subject-matter, with due regard to the description and drawings, relates to processes comprised in the list of subject-matter and activities excluded from patentability under Article 52(2) and (3) EPC. The applicant is advised that in accordance with the established practice of the EPO, no search needs to be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered to be required, as the technical aspects indentified in the present application are considered part of the common general knowledge of the skilled person. For further details, see the Notice from the European Patent Office dated 1 October 2007 (OJ 11/2007; pp. 592 - 593).<br>----- | 1-13 | INV.<br>G06Q30/00<br><br><br><br><br><br>TECHNICAL FIELDS SEARCHED (IPC)<br><br>G06Q |

The present search report has been drawn up for all claims

| Place of search | Date of completion of the search | Examiner |
|---|---|---|
| Munich | 21 June 2010 | Härdeman, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007052557 A

- JP 2009015704 A